# EUROPEAN PATENT APPLICATION

(11) **EP 4 390 819 A1**
(43) Date of publication of application: **26.06.2024**
(21) Application number: 23198728.0
(22) Date of filing: 21.09.2023
(51) Int. Cl.: G06Q 20/20, G06Q 30/0201, G07G 1/00

(54) **INFORMATION OUTPUT PROGRAM, INFORMATION OUTPUT METHOD, AND INFORMATION PROCESSING DEVICE**

(30) Priority: 21.12.2022 JP 2022204998
(71) Applicant: Fujitsu Limited, Kawasaki-shi, Kanagawa 211-8588 (JP)
(72) Inventor: Jo, Yuka, Kawasaki-shi, Kanagawa, 211-8588 (JP); Murase, Kentaro, Kawasaki-shi, Kanagawa, 211-8588 (JP)
(74) Representative: Hoffmann Eitle

(57) **Abstract**

An information output program causes a computer to execute processing including: acquiring a video of an inside of a store; specifying, by analyzing the acquired video, a first area that includes a store clerk, a second area that includes an object customer who purchases a product, and a first relationship that identifies an interaction between the store clerk and the customer, from the video; determining that the store clerk included in the first area has performed service behavior with respect to the customer included in the second area based on the specified first relationship; and outputting a result of the determination to a display device.

## Description

### FIELD

The embodiments discussed herein are related to an information output program, an information output method, and an information processing device.

### BACKGROUND

Since service of store clerks in a store or the like affects evaluation of the store, there is an aspect that improvement in content of the service of the store clerks is needed. From such an aspect, the service of the store clerk with respect to a customer is evaluated by using a video of a camera installed in the store. Furthermore, there is a technology that uses a machine learning model to extract a bounding box (Bbox), which is a rectangle surrounding an area including an object or a person, from the video.

Japanese Laid-open Patent Publication No. 2022-165483 is disclosed as related art.

### SUMMARY

### TECHNICAL PROBLEM

However, since a positional relationship between Bboxes extracted from a video is based on a two-dimensional space, for example, a depth between the Bboxes may not be analyzed, and it is difficult to identify a relationship between a person and a person. Furthermore, since it is not easy to detect service behavior of a store clerk while various people behave in a variety of ways in a store, there is an aspect that it is difficult to support evaluation of the service behavior of the store clerk.

In one aspect, an object is to provide an information output program, an information output method, and an information processing device capable of supporting evaluation of service behavior of a store clerk.

According to an aspect of the embodiments, an information output program causes a computer to execute processing including: acquiring a video of an inside of a store; specifying, by analyzing the acquired video, a first area that includes a store clerk, a second area that includes an object customer who purchases a product, and a first relationship that identifies an interaction between the store clerk and the customer, from the video; determining that the store clerk included in the first area has performed service behavior with respect to the customer included in the second area based on the specified first relationship; and outputting a result of the determination to a display device.

### ADVANTAGEOUS EFFECTS OF INVENTION

According to one embodiment, it is possible to support evaluation of service behavior of a store clerk.

### BRIEF DESCRIPTION OF DRAWINGS

FIG. 1 is a diagram illustrating a configuration example of a system;
FIG. 2 is a block diagram illustrating a functional configuration example of an information processing device;
FIG. 3 is a diagram illustrating an example of correct answer information;
FIG. 4 is a diagram illustrating an example of the correct answer information;
FIG. 5 is a schematic diagram illustrating a training example of a first human object interaction detection (HOID) model;
FIG. 6 is a schematic diagram illustrating a training example of a second HOID model;
FIG. 7 is a diagram illustrating an output example of the first HOID model;
FIG. 8 is a diagram illustrating an example of an identifier (ID) management database (DB);
FIG. 9 is a schematic diagram illustrating an example of start and end of tracking;
FIG. 10 is a diagram illustrating an output example of the second HOID model;
FIG. 11 is a diagram illustrating an example of an attention degree specification rule DB;
FIG. 12 is a diagram illustrating an example of a customer behavior history DB;
FIG. 13 is a diagram illustrating an example of a service evaluation DB;
FIG. 14 is a diagram illustrating an example of a service evaluation screen;
FIG. 15 is a diagram illustrating an example of the service evaluation screen;
FIG. 16 is a flowchart illustrating a procedure of video acquisition processing;
FIG. 17 is a flowchart illustrating a procedure of determination processing;
FIG. 18 is a flowchart illustrating a procedure of specification processing;
FIG. 19 is a flowchart illustrating a procedure of generation processing;
FIG. 20 is a diagram illustrating a hardware configuration example of the information processing device; and
FIG. 21 is a diagram illustrating a hardware configuration example of a self-checkout machine.

### DESCRIPTION OF EMBODIMENTS

Hereinafter, embodiments of an information output program, an information output method, and an information processing device disclosed in the present application will be described in detail with reference to the drawings. Note that these embodiments do not limit the present disclosure. Furthermore, the respective embodiments may be appropriately combined with each other in a range without contradiction.

### [First Embodiment]

### <1. Overall Configuration>

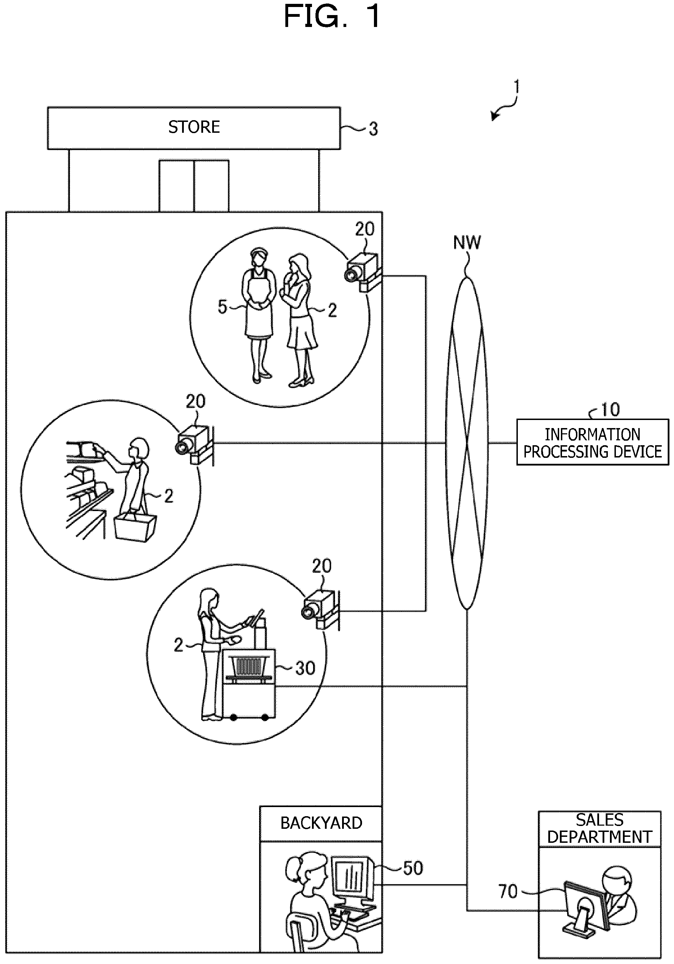

FIG. 1 is a diagram illustrating a configuration example of a system. A system 1 illustrated in FIG. 1 provides, from an aspect of supporting evaluation of service behavior of a store clerk 5 in a store 3 such as a supermarket or a convenience store, an information output function that detects and outputs the service behavior of the store clerk by using a video captured in the store 3.

As illustrated in FIG. 1, the system 1 may include an information processing device 10, cameras 20, a self-checkout machine 30, a backyard terminal 50, and a sales department terminal 70. The information processing device 10, the cameras 20, the self-checkout machine 30, the backyard terminal 50, and the sales department terminal 70 are coupled via a network NW. For example, the network NW may be various communication networks regardless of whether the network NW is wired or wireless.

The information processing device 10 is an example of a computer that provides the information output function described above. For example, by being implemented as a platform as a service (PaaS) type or software as a service (SaaS) type application, the information processing device 10 may provide the information output function described above as a cloud service. Additionally, the information processing device 10 may be implemented as a server that provides the information output function described above on-premises.

The camera 20 is an example of an image capturing device that captures a video. The camera 20 is installed so as to be able to capture a specific range in the store 3, for example, an area including a place where a product is sold, a display shelf of a product, or the self-checkout machine 30 installed in a checkout section. With this configuration, for example, a composition in which the store clerk 5 serves a customer 2, a composition in which the customer 2 behaves at the display shelf or the like of the product, a composition in which the customer 2 performs checkout at the self-checkout machine 30, or the like may be captured.

Data of the video captured by the camera 20 in this manner is transmitted to the information processing device 10. For example, the data of the video includes a plurality of time-series image frames. To each image frame, a frame number is assigned in a time-series ascending order. One image frame is image data of a still image captured by the camera 20 at a certain timing. Hereinafter, the data of the video may be referred to as "video data".

The self-checkout machine 30 is an example of an accounting machine by which a customer himself/herself who purchases a product performs checkout machine registration and checkout (payment) of the product to be purchased. The self-checkout machine 30 is called "self checkout", "automated checkout", "self-checkout machine", "self-check-out register", or the like. For example, when the customer 2 moves a product to be purchased to a scan area of the self-checkout machine 30, the self-checkout machine 30 scans a code printed or attached to the product and registers the product to be purchased.

The customer 2 repeatedly executes the checkout machine registration operation described above, and when scanning of the products is completed, the customer 2 operates a touch panel or the like of the self-checkout machine 30 and makes a checkout request. When accepting the checkout request, the self-checkout machine 30 presents the number of products to be purchased, a purchase amount, and the like, and executes checkout processing. The self-checkout machine 30 registers, in a storage unit, information regarding the products scanned from the start of scanning by the customer 2 until the checkout request is made, and transmits the information to the information processing device 10 as self-checkout machine data (product information).

The backyard terminal 50 and the sales department terminal 70 are terminal devices used by related persons of the store 3. The "related persons" mentioned here may include not only the store clerk 5 of the store 3 and an administrator who manages the store clerk 5, but also an employee, an administrator, and the like of a sales department of an organization such as a company that operates the store 3. As one aspect, the backyard terminal 50 and the sales department terminal 70 function as clients that receive provision of the information output function described above. For example, the backyard terminal 50 and the sales department terminal 70 may be implemented by an optional computer such as a desktop type or laptop type personal computer. This is merely an example, and the backyard terminal 50 and the sales department terminal 70 may be implemented by a mobile terminal device, a wearable terminal, or the like.

In such a configuration, the information processing device 10 acquires a video of the inside of the store. Then, by analyzing the acquired video, the information processing device 10 specifies, from the video, a first area including a store clerk, a second area including an object customer who purchases a product, and a first relationship identifying an interaction between the store clerk and the customer. Then, the information processing device 10 determines that the store clerk included in the first area has performed service behavior with respect to the customer included in the second area based on the specified first relationship, and outputs a result of the determination to a display device. As a result, as one aspect, the information processing device 10 may support evaluation of the service behavior of the store clerk.

### <2. Functional Configuration>

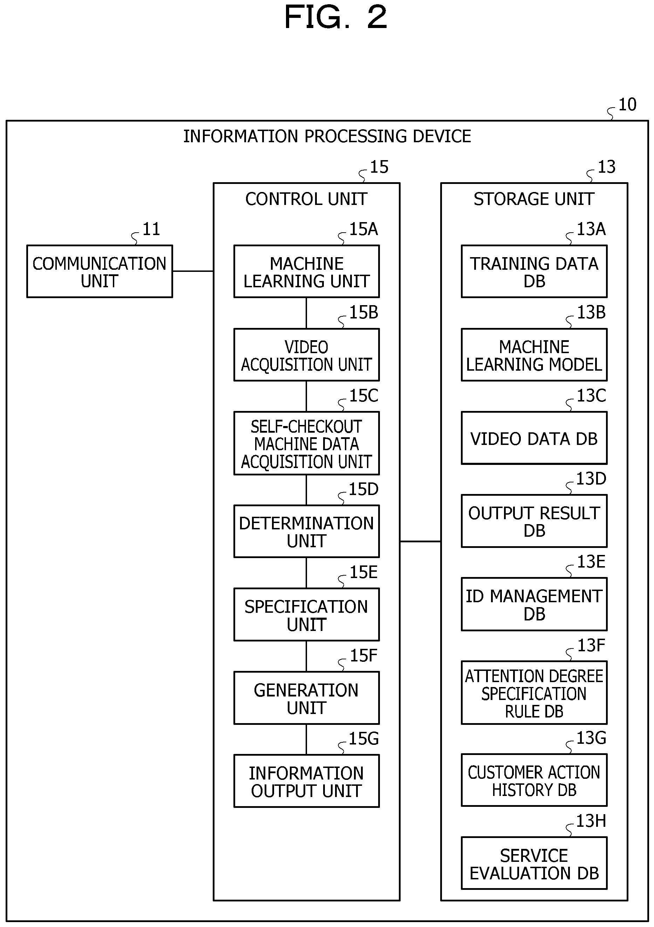

FIG. 2 is a block diagram illustrating a functional configuration example of the information processing device 10. As illustrated in FIG. 2, the information processing device 10 includes a communication unit 11, a storage unit 13, and a control unit 15.

### <2-1. Communication Unit>

The communication unit 11 is a processing unit that controls communication with another device, and is implemented by, for example, a communication interface or the like. For example, the communication unit 11 receives video data from the cameras 20, or transmits a processing result by the control unit 15 to the backyard terminal 50, the sales department terminal 70, or the like.

### <2-2. Storage Unit>

The storage unit 13 is a processing unit that stores various types of data, programs to be executed by the control unit 15, or the like, and is implemented by, for example, a memory, a hard disk, or the like. The storage unit 13 stores a training data database (DB) 13A, a machine learning model 13B, a video data DB 13C, an output result DB 13D, an identifier (ID) management DB 13E, an attention degree specification rule DB 13F, a customer behavior history DB 13G, and a service evaluation DB 13H.

### <2-2-1. Training Data DB>

The training data DB 13A is a database that stores data used to train a first machine learning model 13B1 and a second machine learning model 13B2.

The first machine learning model 13B1 is a first machine learning model used to detect service behavior of the store clerk 5 with respect to the customer 2. As merely an example, an example will be exemplified where the first machine learning model 13B1 is implemented by human object interaction detection (HOID). Hereinafter, the model for the HOID corresponding to the first machine learning model 13B1 may be referred to as a "first HOID model". For training the first HOID model, image data serving as input data and correct answer information set for the image data are used.

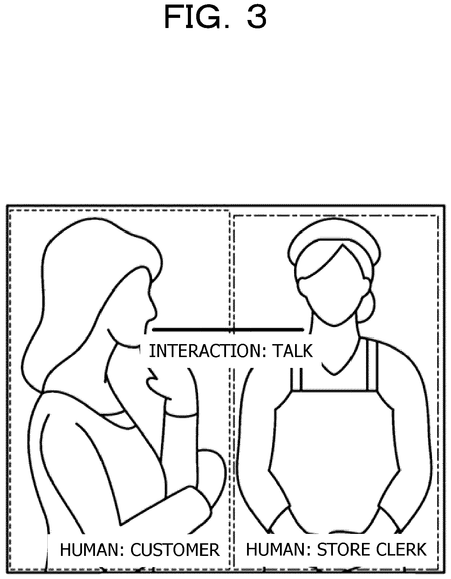

FIG. 3 is a diagram illustrating an example of the correct answer information. In FIG. 3, the correct answer information of the first HOID model is indicated. As illustrated in FIG. 3, in the correct answer information, classes of humans to be detected, a class indicating an interaction between the human and the human, and bounding boxes (Bboxes: area information regarding objects) indicating areas of the respective classes are set. In the example illustrated in FIG. 3, a class "store clerk" indicating the store clerk 5 of the store 3, a class "customer" indicating an object person who purchases a product, for example, the customer 2, area information regarding these humans, and a relationship "talk" indicating an interaction between the human and the human are set as the correct answer information. Note that, here, although "talk" has been exemplified as an example of the class of the interaction, image data in which another class of the interaction, for example, "see", "touch", or the like is set as the correct answer information may be used as training data for training the first machine learning model 13B1.

The second machine learning model 13B2 is a second machine learning model used to specify behavior of the customer 2 with respect to a product after service by the store clerk 5. As merely an example, an example will be exemplified where the second machine learning model 13B2 is implemented by the HOID. Hereinafter, the model for the HOID corresponding to the second machine learning model 13B2 may be referred to as a "second HOID model". Also for training the second HOID model, image data serving as input data and correct answer information set for the image data are used.

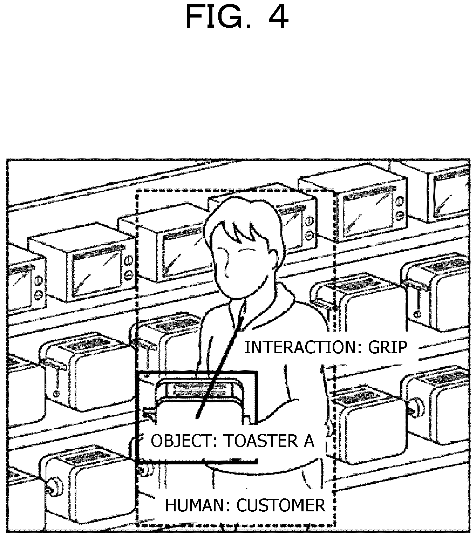

FIG. 4 is a diagram illustrating an example of the correct answer information. In FIG. 4, the correct answer information of the second HOID model is indicated. As illustrated in FIG. 4, in the correct answer information, classes of a human and an object to be detected, a class indicating an interaction between the human and the object, and Bboxes indicating areas of the respective classes are set. For example, a class indicating an item name "toaster A" for identifying an item of a product, a class "customer" indicating an object person who purchases the product, for example, the customer 2, area information regarding the object and the human, and a relationship "grip" indicating an interaction between the object and the human are set as the correct answer information. Note that, here, although "grip" has been exemplified as an example of the class of the interaction, image data in which another class of the interaction, for example, "see", "touch", or the like is set as the correct answer information may be used as training data for training the second machine learning model 13B2.

Here, the item name is exemplified as merely an example of the object class, but the class set to the object may be a Something class indicating an object such as a product other than a plastic shopping bag. Normally, when the Something class is created in normal object identification (object recognition), all objects that are not related to a task, such as all backgrounds, clothes, and accessories, are detected. Furthermore, since they are all Something, only a large number of Bboxes are identified in the image data, and nothing is known. In the case of the HOID, since it may be known that there is a special relationship of the object possessed by the human (there may be another relationship such as sitting or operating), it is possible to use the relationship for a task (for example, a fraud detection task of a self-checkout machine) as meaningful information. After the object is detected by Something, the plastic shopping bag or the like is identified as a unique class called Bag (plastic shopping bag). The plastic shopping bag is valuable information in the fraud detection task of the self-checkout machine, but is not important information in another task. Thus, it is valuable to use the plastic shopping bag based on unique knowledge of the fraud detection task of the self-checkout machine that a product is taken out from a basket (shopping basket) and stored in the bag, and a useful effect may be obtained.

Note that, here, an example has been exemplified where the detection of the service behavior of the store clerk 5 with respect to the customer 2 and the specification of the behavior of the customer 2 with respect to the product after the service by the store clerk 5 are implemented by the two machine learning models, but the detection and the specification may be implemented by one machine learning model, for example, an HOID model.

### <2-2-2. Machine Learning Model>

Returning to FIG. 2, the machine learning model 13B may include the first machine learning model 13B1 described above and the second machine learning model 13B2 described above.

The first machine learning model 13B1 may be implemented by the HOID described above as merely an example. In this case, the first machine learning model 13B1 identifies a human corresponding to the store clerk 5 of the store 3, a human corresponding to the customer 2 who purchases a product, and a relationship between these humans from input image data, and outputs a result of the identification. For example, "one or a plurality of human classes and area information, and an interaction between a human and a human" are output. Note that, here, an example will be exemplified where the first machine learning model 13B1 is implemented by the HOID, but the first machine learning model 13B1 may be implemented by a machine learning model using various neural networks or the like.

The second machine learning model 13B2 may also be implemented by the HOID described above as merely an example. In this case, the second machine learning model 13B2 identifies a human, a product, and a relationship between the human and the product from input image data, and outputs a result of the identification. For example, "a human class and area information, a product (object) class and area information, an interaction between the human and the product" are output. Note that, here, an example will be exemplified where the second machine learning model 13B2 is implemented by the HOID, but the second machine learning model 13B2 may be implemented by a machine learning model using various neural networks or the like.

### <2-2-3. Video Data DB>

The video data DB 13C is a database that stores video data captured by the camera 20 installed so as to be able to capture an area including a place where a product is sold, a display shelf of a product, or the self-checkout machine 30 installed in a checkout section. For example, the video data DB 13C stores, for each camera 20, image data or the like acquired from the camera 20 in units of frames.

### <2-2-4. Output Result DB>

The output result DB 13D is a database that stores an output result output by the first machine learning model 13B1 to which video data captured by the camera 20 is input. For example, the output result DB 13D stores, for each camera 20, an output result or the like obtained by inputting image data acquired from the camera 20 to the first machine learning model 13B1 in units of frames.

### <2-2-5. ID Management DB>

The ID management DB 13E is a database that manages a service ID allocated when service behavior of the store clerk 5 with respect to the customer 2 is detected. For example, the ID management DB 13E stores a combination of a customer ID for identifying the customer 2 and a store clerk ID for identifying the store clerk 5 in association with each service ID.

### <2-2-6. Attention Degree Specification Rule DB>

The attention degree specification rule DB 13F is a database that stores a rule for specifying an attention degree of the customer 2 with respect to a product after service by the store clerk 5. For example, the attention degree specification rule DB 13F stores behavior performed by the customer 2 after the service by the store clerk 5 and the attention degree in which a degree of attention is classified into a plurality of stages in association with each other. Hereinafter, the behavior performed by the customer 2 may be referred to as "customer behavior".

### <2-2-7. Customer Behavior History DB>

The customer behavior history DB 13G is a database that stores a history of customer behavior after service by the store clerk 5. For example, the customer behavior history DB 13G stores a time when the customer behavior is performed, a type of the customer behavior, an attention degree, an item of a product for which the customer behavior is detected, and the like in association with each customer ID.

### <2-2-8. Service Evaluation DB>

The service evaluation DB 13H is a database that stores information regarding service evaluation of the store clerk 5. For example, the service evaluation DB 13H stores an aggregated value for each attention degree of the customer 2 with respect to a product after service, the number of products purchased, and the like in association with each store clerk ID.

### <2-3. Control Unit>

The control unit 15 is a processing unit that performs overall control of the information processing device 10, and is implemented by, for example, a processor or the like. The control unit 15 includes a machine learning unit 15A, a video acquisition unit 15B, a self-checkout machine data acquisition unit 15C, a determination unit 15D, a specification unit 15E, a generation unit 15F, and an information output unit 15G. Note that the machine learning unit 15A, the video acquisition unit 15B, the self-checkout machine data acquisition unit 15C, the determination unit 15D, the specification unit 15E, the generation unit 15F, and the information output unit 15G are implemented by an electronic circuit included in a processor, processes executed by the processor, and the like.

### <2-3-1. Machine Learning Unit>

The machine learning unit 15A is a processing unit that executes machine learning of the first machine learning model 13B1 and the second machine learning model 13B2.

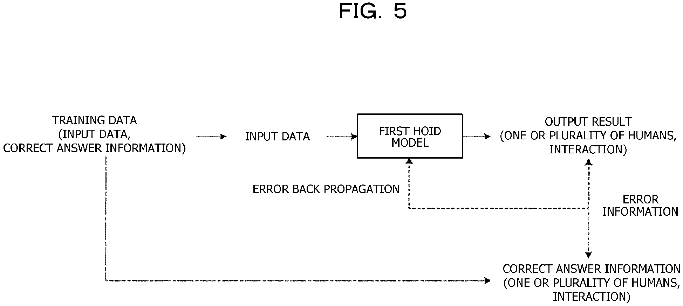

As one aspect, the machine learning unit 15A executes machine learning of the first HOID model, which is an example of the first machine learning model 13B1, by using each piece of training data stored in the training data DB 13A. FIG. 5 is a schematic diagram illustrating a training example of the first HOID model. As illustrated in FIG. 5, the machine learning unit 15A inputs input data of the training data to the first HOID model, and acquires an output result of the first HOID model. The output result includes one or a plurality of human classes, an interaction between a human and a human, and the like detected by the first HOID model. Then, the machine learning unit 15A calculates error information between correct answer information of the training data and the output result of the first HOID model, and executes machine learning of the first HOID model by error back propagation so as to reduce the error. With this configuration, the trained first HOID model is generated. The trained first HOID model generated in this manner is stored in the storage unit 13 as the first machine learning model 13B1.

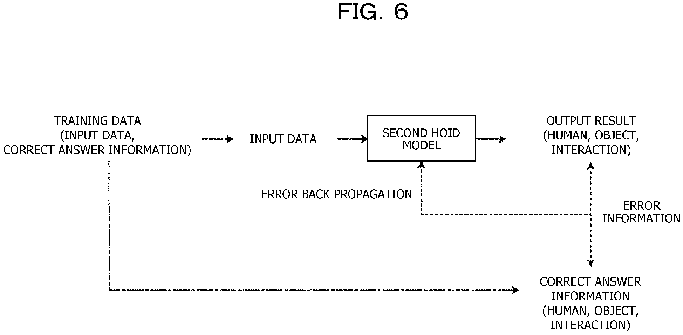

As another aspect, the machine learning unit 15A executes machine learning of the second HOID model, which is an example of the second machine learning model 13B2, by using each piece of training data stored in the training data DB 13A. FIG. 6 is a schematic diagram illustrating a training example of the second HOID model. As illustrated in FIG. 6, the machine learning unit 15A inputs input data of the training data to the second HOID model, and acquires an output result of the second HOID model. The output result includes a human class, an object class, an interaction between the human and the object, and the like detected by the second HOID model. Then, the machine learning unit 15A calculates error information between correct answer information of the training data and the output result of the second HOID model, and executes machine learning of the second HOID model by error back propagation so as to reduce the error. With this configuration, the trained second HOID model is generated. The trained second HOID model generated in this manner is stored in the storage unit 13 as the second machine learning model 13B2.

### <2-3-2. Video Acquisition Unit>

Returning to the description of FIG. 2, the video acquisition unit 15B is a processing unit that acquires video data from the camera 20. For example, the video acquisition unit 15B acquires video data from the camera 20 installed for the self-checkout machine 30 in an optional cycle, for example, in units of frames. Then, in a case where image data of a new frame is acquired, the video acquisition unit 15B inputs the image data to the first machine learning model 13B1, for example, the first HOID model, and acquires an output result of the first HOID model. Then, the video acquisition unit 15B stores the image data of the new frame in the video data DB 13C, and stores the output result of the first HOID model related to the new frame in the output result DB 13D.

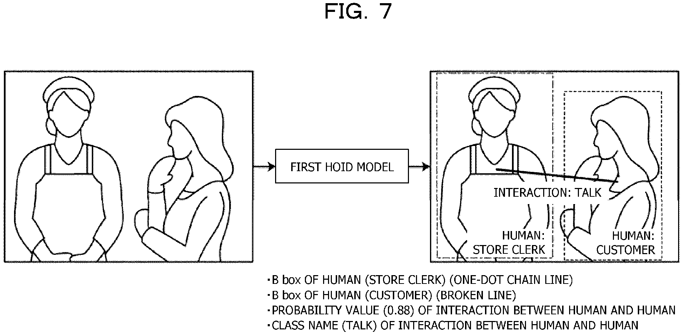

Such an output result of the first HOID model may include a human class corresponding to the first area, a human class corresponding to the second area, a class indicating an interaction between these humans, and Bboxes indicating areas of the respective classes. FIG. 7 is a diagram illustrating an output example of the first HOID model. In FIG. 7, image data that is input data to the first HOID model and an output result of the first HOID model are illustrated. In FIG. 7, a Bbox of a human corresponding to the store clerk 5 is indicated by a one-dot chain line frame, and a Bbox of a human corresponding to the customer 2 is indicated by a broken line frame. As illustrated in FIG. 7, the output result of the first HOID model includes a human class "store clerk" and the Bbox, a human class "customer" and the Bbox, and a probability value "0.88" and a class name "talk" of an interaction between these humans.

### <2-3-3. Self-Checkout Machine Data Acquisition Unit>

The self-checkout machine data acquisition unit 15C is a processing unit that acquires, as self-checkout machine data, information regarding a product subjected to checkout machine registration in the self-checkout machine 30. The "checkout machine registration" mentioned here may be implemented by scanning a product code printed or attached to the product, or may be implemented by manually inputting the product code by the customer 2.

### <2-3-4. Determination Unit>

The determination unit 15D is a processing unit that determines whether or not the store clerk 5 included in the first area has performed service behavior with respect to the customer 2 included in the second area based on a relationship between the humans detected by the first HOID model.

As merely an example, the determination unit 15D executes the following processing in units of frames of image data for each camera 20 installed in the store 3. In other words, the determination unit 15D acquires an output result corresponding to a new frame among output results of the first HOID model stored in the output result DB 13D.

Subsequently, the determination unit 15D determines whether or not detection results of both classes of the store clerk 5 and the customer 2 are included in the output result of the new frame. At this time, in a case where the detection results of both the classes of the store clerk 5 and the customer 2 are included in the output result of the new frame, the determination unit 15D further determines whether or not a class of an interaction included in the output result of the new frame is "talk".

Here, in a case where the class of the interaction included in the output result of the new frame is "talk", service behavior of the store clerk 5 with respect to the customer 2 may be detected. In this case, the determination unit 15D further determines whether or not tracking of the customer 2 detected in the new frame is unset. At this time, in a case where tracking of the customer 2 detected in the new frame is unset, the determination unit 15D issues a customer ID to the customer 2. The reason why the customer ID is issued at the timing when the service behavior is detected in this manner is that it is easy to issue store clerk IDs to all the store clerks 5 in advance since the store clerks 5 are employees of the store 3, but it is not easy to issue customer IDs to all the customers 2 in advance.

Thereafter, the determination unit 15D allocates a service ID for identifying a combination of the store clerk ID corresponding to the store clerk 5 detected in the new frame and the customer ID issued to the customer 2 detected in the new frame. In a case where the new service ID is allocated in this manner, a data entry in which the service ID and the combination of the store clerk ID and the customer ID are associated with each other is additionally registered in the ID management DB 13E.

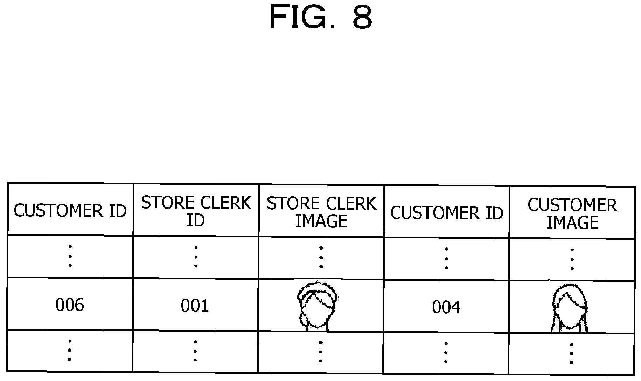

FIG. 8 is a diagram illustrating an example of the ID management DB 13E. As illustrated in FIG. 8, the ID management DB 13E stores data in which a store clerk ID, an image of the store clerk 5, a customer ID of the customer 2, and an image of the customer 2 are associated with each service ID. Hereinafter, the image of the store clerk 5 may be referred to as a "store clerk image", and the image of the customer 2 may be referred to as a "customer image". Among these, in a column of the store clerk image, an image registered in advance in association with the store clerk ID may be used, or a partial image corresponding to a Bbox of the human "store clerk" detected in a new frame may be used. Furthermore, in a column of the customer image, a partial image corresponding to a Bbox of the human "customer" detected in the new frame may be used.

After the service ID is issued in this manner, the determination unit 15D adds the service ID to a tracking list in which the service IDs tracking the customers 2 after the service by the store clerk 5 are listed.

### <2-3-5. Specification Unit>

The specification unit 15E is a processing unit that specifies an attention degree of the customer 2 with respect to a product after service. As merely an example, the specification unit 15E collects, for each service ID included in the tracking list, a history of customer behavior including the attention degree of the customer 2 with respect to the product by tracking the customer with a customer ID associated with the service ID.

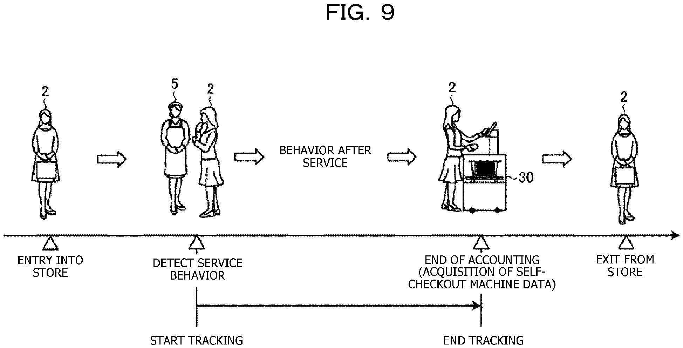

FIG. 9 is a schematic diagram illustrating an example of start and end of tracking. In FIG. 9, as examples of events occurring for the customer 2 visiting the store 3, an example is illustrated where each event occurs in the following order: entry of the customer 2 into the store, service behavior of the store clerk 5 with respect to the customer 2, end of accounting by the customer 2, and exit of the customer 2 from the store. As illustrated in FIG. 9, tracking of the customer 2 by the specification unit 15E is executed until accounting of a purchased product of the customer 2 is ended after the service behavior of the store clerk 5 with respect to the customer 2 is detected.

Such tracking may be implemented by calculating similarity between a face image included in a customer image associated with a service ID and a face image obtained by face detection with respect to image data of a new frame acquired for each camera 20, and tracking image data including a face image of which the similarity is equal to or greater than a threshold. Moreover, by applying image processing to the image data in which the customer 2 is tracked by the tracking, a position of the customer 2 in a three-dimensional space may be specified. As examples of such image processing, stereo matching using image data of the plurality of cameras 20, position detection using a marker installed in the store 3, and the like are exemplified. Additionally, in a case where the camera 20 is a depth camera, a three-dimensional position may be calculated more accurately based on a depth value of a subject of the customer 2 and camera parameters, for example, an external parameter and an internal parameter. Note that, here, an example has been exemplified where the tracking is executed by collation of the face image, but the tracking may be executed according to an algorithm such as multiple-object tracking (MOT).

More specifically, the specification unit 15E determines whether or not self-checkout machine data related to the customer 2 with the customer ID associated with the service ID has been acquired. For example, in a case where the self-checkout machine data is acquired from the self-checkout machine 30 whose distance from a position of the customer 2 is within a threshold, for example, 50 cm, the specification unit 15E identifies that accounting of the customer 2 is ended. The "distance" mentioned here may be a distance between a tracking position of the customer 2 and an operation position at which an input device included in the self-checkout machine 30 is arranged, for example, a position of a screen of a touch panel, as merely an example.

At this time, in a case where the accounting of the customer 2 is not ended, the specification unit 15E inputs the image data in which the customer 2 is tracked by the tracking to the second machine learning model 13B2, for example, the second HOID model, and acquires an output result of the second HOID model.

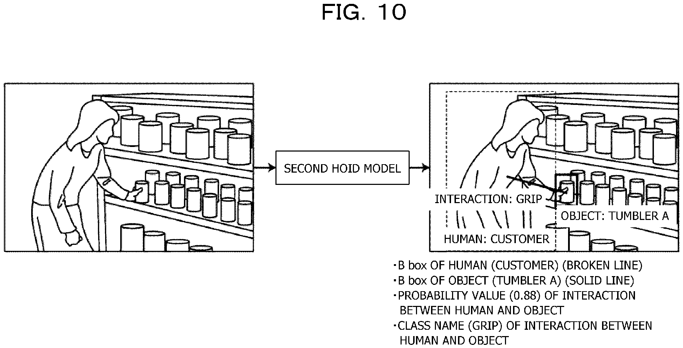

FIG. 10 is a diagram illustrating an output example of the second HOID model. In FIG. 10, image data that is input data to the second HOID model and an output result of the second HOID model are illustrated. In FIG. 10, a Bbox of a human corresponding to the customer 2 is indicated by a broken line frame, and a Bbox of an object is indicated by a solid line frame. As illustrated in FIG. 10, the output result of the second HOID model includes a human class "customer" and the Bbox, an object class "tumbler A" and the Bbox, and a probability value "0.88" and a class name "grip" of an interaction between the human and the object.

Thereafter, the specification unit 15E determines whether or not detection results of both the classes of the customer 2 and the product are included in the output result of the second HOID model. At this time, in a case where the detection results of both the classes of the customer 2 and the product are included in the output result of the second HOID model, the specification unit 15E specifies an attention degree corresponding to the class of the interaction included in the output result of the second HOID model according to the rule set in the attention degree specification rule DB 13F.

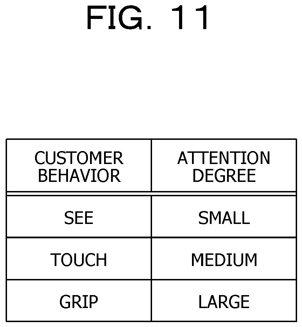

FIG. 11 is a diagram illustrating an example of the attention degree specification rule DB 13F. As illustrated in FIG. 11, the attention degree specification rule DB 13F stores the rule in which behavior performed by the customer 2 after service by the store clerk 5 and an attention degree in which a degree of attention is classified into a plurality of stages are associated with each other. In FIG. 11, as merely an example, an example is illustrated where the attention degree is classified into three stages of "small", "medium", and "large".

For example, in the example illustrated in FIG. 11, in a case where a class of an interaction included in an output result of the second HOID model is "see", an attention degree of the customer 2 with respect to a product is specified as "small". Furthermore, in a case where the class of the interaction included in the output result of the second HOID model is "touch", the attention degree of the customer 2 with respect to the product is specified as "medium". Moreover, in a case where the class of the interaction included in the output result of the second HOID model is "grip", the attention degree of the customer 2 with respect to the product is specified as "large".

Here, as merely an example, the classification of the attention degree described above may be set according to a psychological model in which a correspondence relationship between customer behavior with respect to a product and a psychological stage of purchase is defined. For example, as examples of the psychological model, Attention, Interest, Desire, and Action (AIDA) in which psychological stages such as paying attention to a product (attention), being interested in the product (interest), "wanting" the product (desire), and reaching purchase of the product (action) are defined, Attention, Interest, Desire, Memory, and Action (AIDMA), Attention, Interest, Desire, Conviction, and Action (AIDCA), and the like are exemplified.

After the attention degree is specified in this manner, the specification unit 15E additionally registers, in the customer behavior history DB 13G, a data entry in which the customer ID during tracking, the customer behavior with respect to the product, the attention degree of the customer 2 with respect to the product, an item of the product for which the customer behavior is detected, and the like are associated with each other.

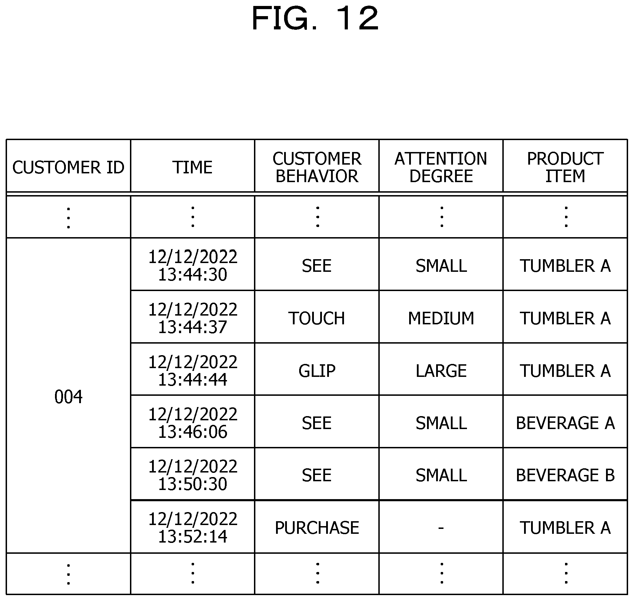

FIG. 12 is a diagram illustrating an example of the customer behavior history DB 13G. As illustrated in FIG. 12, the customer behavior history DB 13G stores data in which a time when customer behavior is performed, a type of the customer behavior, an attention degree, an item of a product for which the customer behavior is detected, and the like are associated with each customer ID.

FIG. 12 illustrates, as merely an example, a customer behavior history related to the customer 2 identified by the customer ID "004" is excerpted and indicated. In the example of the customer behavior history of the customer ID "004" illustrated in FIG. 12, it may be identified that the customer 2 with the customer ID "004" touches and further grips a product item "tumbler A" after seeing the product item "tumbler A". Moreover, it may be identified that the customer 2 with the customer ID "004" sees a product item "beverage A" and sees a product item "beverage B". Thereafter, it may be identified that the customer 2 with the customer ID "004" purchases the product item "tumbler A".

Note that, in a case where the accounting of the customer 2 is ended, the specification unit 15E additionally registers, in the customer behavior history DB 13G, the data entry in which the customer ID for which the end of the accounting is detected and the product item of the purchased product included in the self-checkout machine data are associated with each other, and deletes the service ID for which the end of the accounting is detected from the tracking list.

### <2-3-6. Generation Unit>

The generation unit 15F is a processing unit that analyzes a customer behavior history stored in the customer behavior history DB 13G to generate information regarding service evaluation of the store clerk 5.

As merely an example, the generation unit 15F executes the following processing for each unevaluated service ID among service IDs stored in the ID management DB 13E. In other words, the generation unit 15F searches the customer behavior history DB 13G for a customer behavior history of a customer ID associated with a service ID to be evaluated.

Subsequently, the generation unit 15F extracts the highest attention degree in the customer behavior history hit in the search. For example, in the example of the customer behavior history of the customer ID "004" illustrated in FIG. 12, the attention degrees of all levels of "small", "medium", and "large" are included, and thus the highest attention degree "large" is extracted among these.

Then, the generation unit 15F executes an update to increment an aggregated value corresponding to the attention degree extracted from the customer behavior history among aggregated values for the respective attention degrees of a store clerk ID associated with the service ID to be evaluated.

Thereafter, the generation unit 15F executes the following processing for each purchased product included in the customer behavior history. In other words, the generation unit 15F searches for a product item matching a product item of the purchased product from a data entry in which the column of the attention degree is not blank in the customer behavior history.

At this time, in a case where the product item matching the product item of the purchased product is hit, the generation unit 15F increments an aggregated value of the number of times of purchase establishment of the store clerk ID associated with the service ID to be evaluated. The "number of times of purchase establishment" mentioned here refers to the number of cases where purchase of a product is established by service behavior of the store clerk 5 with respect to the customer 2.

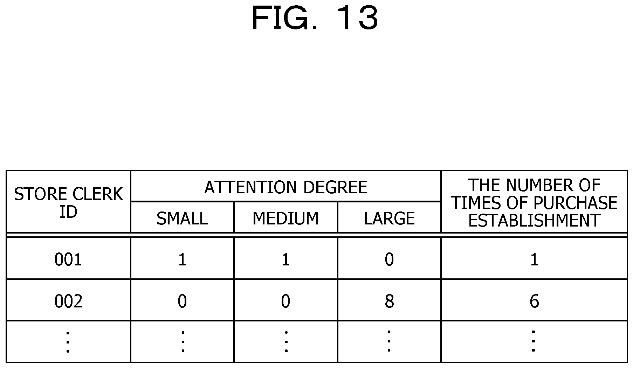

By executing the processing as described above for all the service IDs, the generation unit 15F generates service evaluation data in which the aggregated value for each attention degree and the aggregated value of the number of times of purchase establishment are associated with each store clerk ID, and registers the service evaluation data in the service evaluation DB 13H. FIG. 13 is a diagram illustrating an example of the service evaluation DB 13H. As illustrated in FIG. 13, the service evaluation DB 13H stores data in which an aggregated value for each of attention degrees of "small", "medium", and "large" and an aggregated value of the number of times of purchase establishment are associated with each store clerk ID.

### <2-3-7. Information Output Unit>

The information output unit 15G is a processing unit that outputs various types of information to the terminal devices such as the backyard terminal 50 and the sales department terminal 70. As one aspect, the information output unit 15G outputs information regarding service evaluation stored in the service evaluation DB 13H to the backyard terminal 50 and the sales department terminal 70. For example, the information output unit 15G may output, to the backyard terminal 50 or the sales department terminal 70, an aggregated value for each attention degree and an aggregated value of the number of times of purchase establishment, or an index calculated from the aggregated value and the number of times of purchase establishment for each store clerk. As examples of such an index, a "purchase establishment rate" indicating a ratio of the number of times of purchase establishment to the total number of service behavior, a "purchase establishment score" calculated according to the following Expression (1), and the like are exemplified. Note that "W₁" to "W₃" in the following Expression (1) are weights for the respective attention degrees. Hereinafter, the aggregated value for each attention degree, the aggregated value of the number of times of purchase establishment, the purchase establishment rate, the purchase establishment score, and the like may be referred to as "evaluation item".

Purchase establishment score = {(aggregated value of attention degree "small" × W₁) + (aggregated value of attention degree "medium" × W₂) + (aggregated value of attention degree "large" × W₃)} × purchase establishment rate... (1)

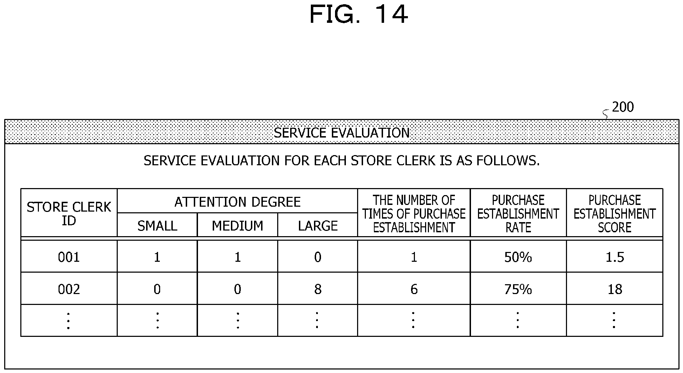

FIG. 14 is a diagram illustrating an example of a service evaluation screen 200. In FIG. 14, the service evaluation screen 200 generated based on the service evaluation DB 13H illustrated in FIG. 13 is illustrated. Moreover, in FIG. 14, an example is indicated where the purchase establishment scores are calculated with the weights for the respective attention degrees being "1", "2", and "3".

As illustrated in FIG. 14, in the service evaluation screen 200, evaluation items such as an aggregated value for each attention degree, an aggregated value of the number of times of purchase establishment, a purchase establishment rate, and a purchase establishment score are displayed for each store clerk ID. For example, the purchase establishment rate for the store clerk ID "001" may be calculated as "50%" by dividing the number of times of purchase establishment "2" by the total number of service behavior "total 2 times = 1 time of attention degree "small" + 1 time of attention degree "medium"". Moreover, the purchase establishment score for the store clerk ID "001" may be calculated as "1.5" by calculating (aggregated value "1" of attention degree "small" × weight "1" of attention degree "small" + aggregated value "1" of attention degree "medium" × weight "2" of attention degree "medium") × purchase establishment rate "50%". According to such display of the service evaluation screen 200, it is possible to evaluate how much the store clerk 5 actively performed the service, how much the service behavior contributed to purchase of a product, and the like, and further to perform comprehensive evaluation of these. Therefore, it is possible to effectively support the evaluation of the service behavior of the store clerk.

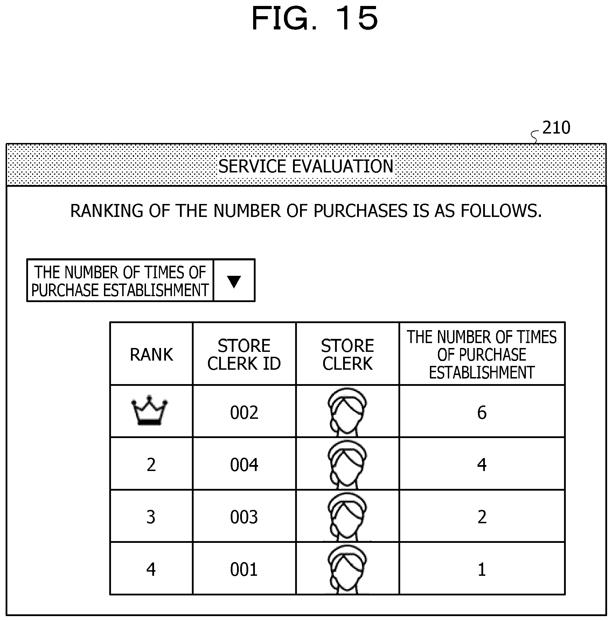

As another aspect, the information output unit 15G may sort the service evaluation stored in the service evaluation DB 13H according to an evaluation item specified by a system definition, a user definition, or the like, so that the service evaluation of the store clerks 5 may be displayed in a ranking format. FIG. 15 is a diagram illustrating an example of a service evaluation screen 210. In FIG. 15, the service evaluation screen 210 in which a ranking obtained by sorting the store clerks 5 in ascending order by the number of times of purchase establishment among the evaluation items included in the service evaluation DB 13H illustrated in FIG. 13 is generated is illustrated. As illustrated in FIG. 15, according to the service evaluation screen 210, it is possible to enhance the evaluation of the store clerk 5 who may make the customers 2 purchase more products.

### <3. Flow of Processing>

Next, a flow of processing of the information processing device 10 according to the present embodiment will be described. Here, (1) video acquisition processing, (2) determination processing, (3) specification processing, and (4) generation processing executed by the information processing device 10 will be described in this order.

### (1) Video Acquisition Processing

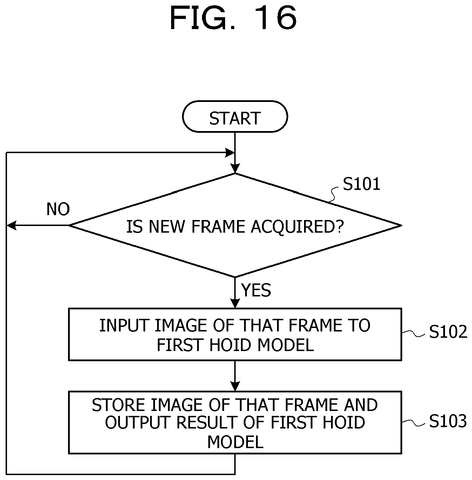

FIG. 16 is a flowchart illustrating a flow of the video acquisition processing. As merely an example, this processing is repeatedly executed as long as video data is acquired from the camera 20.

As illustrated in FIG. 16, in a case where image data of a new frame is acquired (Step S101: Yes), the video acquisition unit 15B inputs the image data to the first machine learning model 13B1, for example, the first HOID model, and acquires an output result of the HOID model (Step S102).

Then, the video acquisition unit 15B stores the image data of the new frame in the video data DB 13C, and stores the output result of the first HOID model related to the new frame in the output result DB 13D (Step S103).

### (2) Determination Processing

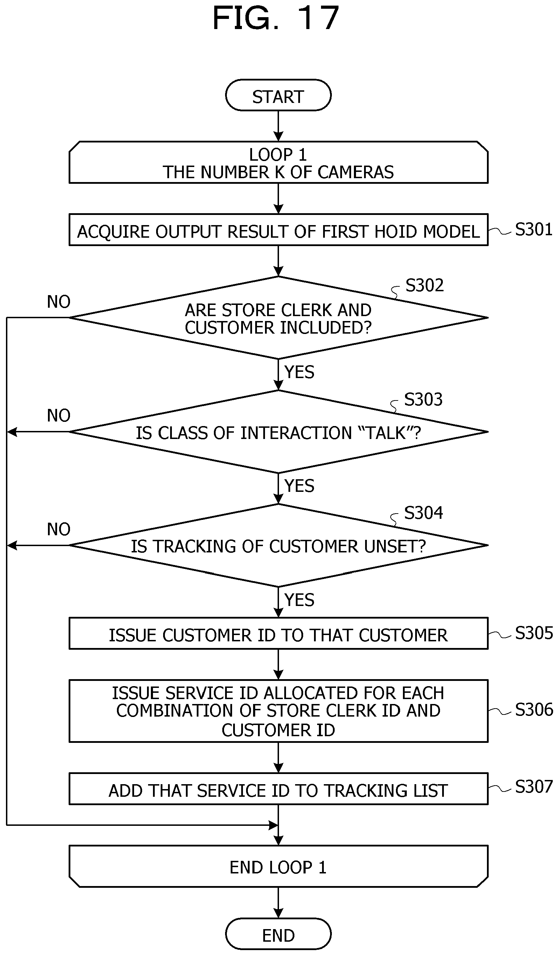

FIG. 17 is a flowchart illustrating a flow of the determination processing. As merely an example, this processing is repeatedly executed in units of frames of image data.

As illustrated in FIG. 17, the determination unit 15D executes loop processing 1 of repeating processing in the following Step S301 to the following Step S307 for the number of times corresponding to the number K of the cameras 20 installed in the store 3. Note that, here, although an example will be exemplified where the processing in the following Step S301 to the following Step S307 is repeated, the processing may be executed in parallel.

In other words, the determination unit 15D acquires an output result corresponding to a new frame among output results of the first HOID model stored in the output result DB 13D (Step S301).

Subsequently, the determination unit 15D determines whether or not detection results of both classes of the store clerk 5 and the customer 2 are included in the output result of the new frame (Step S302). At this time, in a case where the detection results of both the classes of the store clerk 5 and the customer 2 are included in the output result of the new frame (Step S302: Yes), the determination unit 15D further determines whether or not a class of an interaction included in the output result of the new frame is "talk" (Step S303).

Here, in a case where the class of the interaction included in the output result of the new frame is "talk" (Step S303: Yes), service behavior of the store clerk 5 with respect to the customer 2 may be detected. In this case, the determination unit 15D further determines whether or not tracking of the customer 2 detected in the new frame is unset (Step S304).

At this time, in a case where tracking of the customer 2 detected in the new frame is unset (Step S304: Yes), the determination unit 15D issues a customer ID to the customer 2 (Step S305).

Then, the determination unit 15D allocates a service ID for identifying a combination of a store clerk ID corresponding to the store clerk 5 detected in the new frame and the customer ID issued to the customer 2 detected in the new frame (Step S306). Thereafter, the determination unit 15D adds the service ID to a tracking list in which the service IDs tracking the customers 2 after the service by the store clerk 5 are listed (Step S307).

By executing such loop processing 1, it is possible to determine whether or not the store clerk 5 has performed the service behavior from each camera 20 and perform setting so as to start tracking of the customer 2 for which the service behavior has been detected.

### (3) Specification Processing

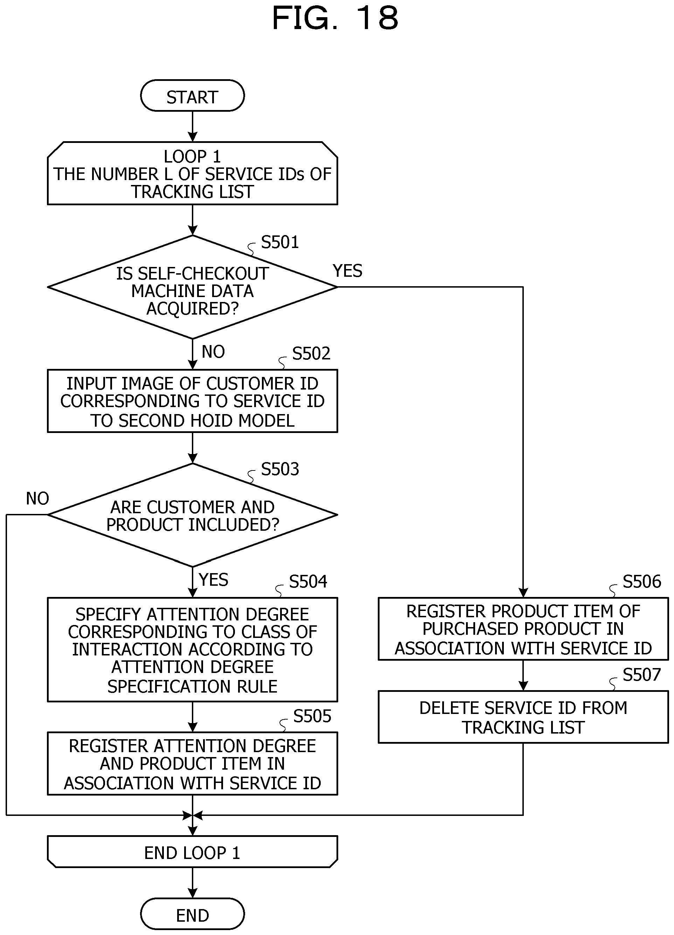

FIG. 18 is a flowchart illustrating a flow of the specification processing. As merely an example, this processing is repeatedly executed in units of frames of image data.

As illustrated in FIG. 18, the specification unit 15E executes loop processing 1 of repeating processing in the following Step S501 to the following Step S507 for the number of times corresponding to the number L of the service IDs included in the tracking list. Note that, here, although an example will be exemplified where the processing in the following Step S501 to the following Step S507 is repeated, the processing may be executed in parallel.

In other words, the specification unit 15E determines whether or not self-checkout machine data related to the customer 2 with the customer ID associated with the service ID has been acquired (Step S501).

At this time, in a case where the self-checkout machine data related to the customer 2 is not acquired (Step S501: No), the specification unit 15E executes the following processing. In other words, the specification unit 15E inputs image data in which the customer 2 is tracked by tracking to the second machine learning model 13B2, for example, the second HOID model, and acquires an output result of the second HOID model (Step S502).

Subsequently, the specification unit 15E determines whether or not detection results of both classes of the customer 2 and a product are included in the output result of the second HOID model (Step S503). At this time, in a case where the detection results of both the classes of the customer 2 and the product are included in the output result of the second HOID model (Step S503: Yes), the specification unit 15E executes the following processing. In other words, the specification unit 15E specifies an attention degree corresponding to a class of an interaction included in the output result of the second HOID model according to the rule set in the attention degree specification rule DB 13F (Step S504).

Thereafter, the specification unit 15E additionally registers, in the customer behavior history DB 13G, a data entry in which the customer ID during tracking, customer behavior with respect to the product, an attention degree of the customer 2 with respect to the product, an item of the product for which the customer behavior is detected, and the like are associated with each other (Step S505).

On the other hand, in a case where the self-checkout machine data related to the customer 2 is acquired (Step S501: Yes), the specification unit 15E additionally registers, in the customer behavior history DB 13G, a data entry in which the customer ID for which end of accounting is detected and the product item of the purchased product included in the self-checkout machine data are associated with each other (Step S506). Moreover, the specification unit 15E deletes the service ID for which the end of the accounting is detected from the tracking list (Step S507).

By executing such loop processing 1, it is possible to collect, for each service behavior, the history of the customer behavior including the subsequent attention degree of the customer 2 with respect to the product.

### (4) Generation Processing

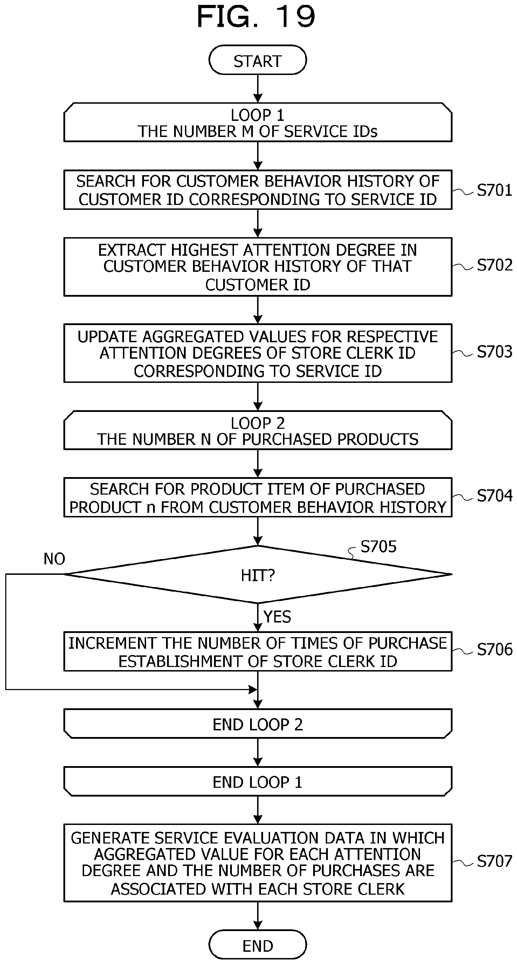

FIG. 19 is a flowchart illustrating a flow of the generation processing. As illustrated in FIG. 19, the generation unit 15F executes loop processing 1 of repeating processing in the following Step S701 to the following Step S706 for the number of times corresponding to the number M of unevaluated service IDs among the service IDs stored in the ID management DB 13E. Note that, here, although an example will be exemplified where the processing in the following Step S701 to the following Step S706 is repeated, the processing may be executed in parallel.

In other words, the generation unit 15F searches the customer behavior history DB 13G for a customer behavior history of a customer ID associated with a service ID to be evaluated (Step S701). Subsequently, the generation unit 15F extracts the highest attention degree in the customer behavior history hit in the search (Step S702).

Then, the generation unit 15F executes an update to increment an aggregated value corresponding to the attention degree extracted in Step S702 among aggregated values for the respective attention degrees of a store clerk ID associated with the service ID to be evaluated (Step S703).

Thereafter, the generation unit 15F executes loop processing 1 of repeating processing in the following Step S704 to the following Step S706 for the number of times corresponding to the number N of purchased products included in the customer behavior history extracted in Step S702. Note that, here, although an example will be exemplified where the processing in the following Step S704 to the following Step S706 is repeated, the processing may be executed in parallel.

In other words, the generation unit 15F searches for a product item matching a product item of the purchased product from a data entry in which the column of the attention degree is not blank in the customer behavior history (Step S704).

At this time, in a case where the product item matching the product item of the purchased product is hit (Step S705: Yes), the generation unit 15F increments the aggregated value of the number of times of purchase establishment of the store clerk ID associated with the service ID to be evaluated (Step S706). Note that, in a case where the product item matching the product item of the purchased product is not hit (Step S705: No), the processing in Step S706 is skipped.

By executing such loop processing 2, the number of times of purchase establishment may be incremented in a case where the customer 2 after service purchases a product.

By executing such loop processing 1, an evaluation value for each evaluation item is aggregated for each service behavior of the store clerk 5 with respect to the customer 2.

Thereafter, the generation unit 15F generates service evaluation data in which the aggregated value for each attention degree and the aggregated value of the number of times of purchase establishment are associated with each store clerk ID, and registers the service evaluation data in the service evaluation DB 13H (Step S707).

### <4. One Aspect of Effects>

As described above, the information processing device 10 acquires a video of the inside of the store. Then, by analyzing the acquired video, the information processing device 10 specifies, from the video, a first area including a store clerk, a second area including an object customer who purchases a product, and a first relationship identifying an interaction between the store clerk and the customer. Then, the information processing device 10 determines that the store clerk included in the first area has performed service behavior with respect to the customer included in the second area based on the specified first relationship, and outputs a result of the determination to a display device. Therefore, according to the information processing device 10, as one aspect, it is possible to support evaluation of the service behavior of the store clerk.

### [Second Embodiment]

### <5. Application Examples>

Incidentally, while the embodiment related to the disclosed device has been described above, the embodiment may be carried out in a variety of different forms apart from the embodiment described above. Thus, hereinafter, application examples included in the embodiment will be described.

### <5-1. Numerical Value>

The number of the cameras 20 and the self-checkout machines 30, numerical value examples, training data examples, the number of pieces of training data, the machine learning models, each class name, the number of classes, the data format, and the like used in the embodiment described above are merely examples, and may be optionally changed. Furthermore, the flow of the processing described in each flowchart may be appropriately changed in a range without contradiction. Furthermore, for each model, a model generated by various algorithms such as a neural network may be adopted.

### <5-2. System>

Pieces of information including a processing procedure, a control procedure, a specific name, various types of data, and parameters described above or illustrated in the drawings may be optionally changed unless otherwise specified.

Furthermore, specific forms of distribution and integration of components of individual devices are not limited to those illustrated in the drawings. That is, all or a part of the components may be functionally or physically distributed or integrated in optional units, according to various types of loads, use situations, or the like. Moreover, all or an optional part of the respective processing functions of each device may be implemented by a central processing unit (CPU) and a program to be analyzed and executed by the CPU, or may be implemented as hardware by wired logic.

### <5-3. Hardware>

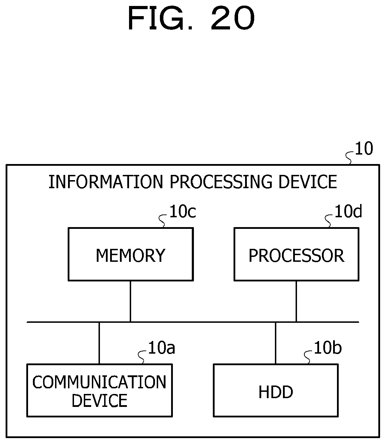

FIG. 20 is a diagram illustrating a hardware configuration example of the information processing device. Here, as an example, the information processing device 10 will be described. As illustrated in FIG. 20, the information processing device 10 includes a communication device 10a, a hard disk drive (HDD) 10b, a memory 10c, and a processor 10d. Furthermore, the respective units illustrated in FIG. 15 are mutually coupled by a bus or the like.

The communication device 10a is a network interface card or the like, and communicates with another device. The HDD 10b stores programs and DBs for operating the functions illustrated in FIG. 2.

The processor 10d reads a program that executes processing similar to that of each processing unit illustrated in FIG. 2 from the HDD 10b or the like, and loads the read program into the memory 10c, thereby operating a process that executes each function described with reference to FIG. 2 or the like. For example, this process executes a function similar to that of each processing unit included in the information processing device 10. Specifically, the processor 10d reads, from the HDD 10b or the like, a program having functions similar to those of the machine learning unit 15A, the video acquisition unit 15B, the self-checkout machine data acquisition unit 15C, the determination unit 15D, the specification unit 15E, the generation unit 15F, the information output unit 15G, and the like. Then, the processor 10d executes processes that execute processing similar to that of the machine learning unit 15A, the video acquisition unit 15B, the self-checkout machine data acquisition unit 15C, the determination unit 15D, the specification unit 15E, the generation unit 15F, the information output unit 15G, and the like.

In this manner, the information processing device 10 operates as an information processing device that executes an information processing method by reading and executing a program. Furthermore, the information processing device 10 may also implement functions similar to those in the embodiment described above by reading the program described above from a recording medium by a medium reading device and executing the read program described above. Note that the program mentioned in another embodiment is not limited to being executed by the information processing device 10. For example, the embodiment described above may be similarly applied also to a case where another computer or server executes the program or a case where these computer and server cooperatively execute the program.

This program may be distributed via a network such as the Internet. Furthermore, this program may be recorded in a computer-readable recording medium such as a hard disk, a flexible disk (FD), a compact disc read only memory (CD-ROM), a magneto-optical disk (MO), or a digital versatile disc (DVD), and may be executed by being read from the recording medium by a computer.

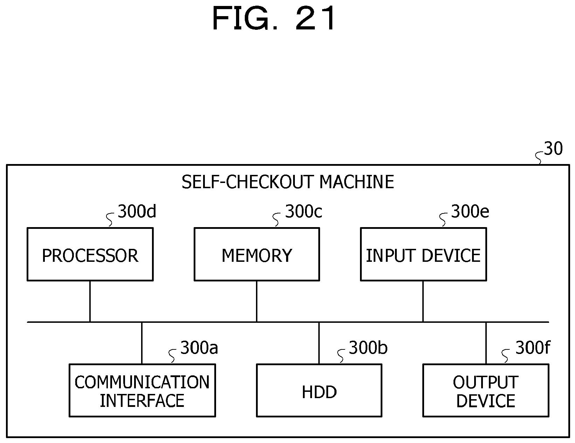

Next, the self-checkout machine 30 will be described. FIG. 21 is a diagram illustrating a hardware configuration example of the self-checkout machine 30. As illustrated in FIG. 21, the self-checkout machine 30 includes a communication interface 300a, an HDD 300b, a memory 300c, a processor 300d, an input device 300e, and an output device 300f. Furthermore, the respective units illustrated in FIG. 21 are mutually coupled by a bus or the like.

The communication interface 300a is a network interface card or the like, and communicates with another information processing device. The HDD 300b stores a program and data for operating each function of the self-checkout machine 30.

The processor 300d is a hardware circuit that reads the program that executes processing of each function of the self-checkout machine 30 from the HDD 300b or the like and loads the read program into the memory 300c, thereby causing a process that executes each function of the self-checkout machine 30 to operate. In other words, this process executes a function similar to that of each processing unit included in the self-checkout machine 30.

In this manner, the self-checkout machine 30 operates as an information processing device that executes operation control processing by reading and executing a program that executes processing of each function of the self-checkout machine 30. Furthermore, the self-checkout machine 30 may also implement each function of the self-checkout machine 30 by reading the program from a recording medium by the medium reading device and executing the read program. Note that the program mentioned in another embodiment is not limited to being executed by the self-checkout machine 30. For example, the present embodiment may be similarly applied also to a case where another computer or server executes the program or a case where these computer and server cooperatively execute the program.

Furthermore, the program that executes the processing of each function of the self-checkout machine 30 may be distributed via a network such as the Internet. Furthermore, this program may be recorded in a computer-readable recording medium such as a hard disk, an FD, a CD-ROM, an MO, or a DVD, and may be executed by being read from the recording medium by a computer.

The input device 300e detects various types of input operation by a user, such as input operation for a program executed by the processor 300d. The input operation includes, for example, touch operation or the like. In the case of the touch operation, the self-checkout machine 30 further includes a display unit, and the input operation detected by the input device 300e may be touch operation for the display unit. The input device 300e may be, for example, a button, a touch panel, a proximity sensor, and the like. Furthermore, the input device 300e reads a barcode. The input device 300e is, for example, a barcode reader. The barcode reader includes a light source and an optical sensor, and scans a barcode.

The output device 300f outputs data output from a program executed by the processor 300d via an external device coupled to the self-checkout machine 30, for example, an external display device or the like. Note that, in a case where the self-checkout machine 30 includes the display unit, the self-checkout machine 30 does not have to include the output device 300f.

## Claims

1. An information output program for causing a computer to execute processing comprising:
acquiring a video of an inside of a store;
specifying, by analyzing the acquired video, a first area that includes a store clerk, a second area that includes an object customer who purchases a product, and a first relationship that identifies an interaction between the store clerk and the customer, from the video;
determining that the store clerk included in the first area has performed service behavior with respect to the customer included in the second area based on the specified first relationship; and
outputting a result of the determination to a display device.

2. The information output program according to claim 1, wherein
the processing of acquiring includes processing of acquiring a video that includes a customer served by the store clerk,
the processing of specifying includes processing of specifying, by analyzing the acquired video, a third area that includes a product, a fourth area that includes the customer, and a second relationship that identifies an interaction between the product and the customer, from the video, and
the computer is further caused to execute processing including:
specifying a degree of attention of the product included in the third area by the customer included in the fourth area based on the second relationship and a preset rule;
generating an analysis image in which the specified degree of attention of the product is associated with the store clerk who has served the customer; and
displaying the generated analysis image on a display device.

3. The information output program according to claim 1, for causing the computer to further execute processing comprising:
tracking a person included in the second area;
specifying an accounting machine used by the tracked person by analyzing a video obtained by capturing an area that includes the accounting machine;
acquiring information regarding a purchased product registered in the specified accounting machine;
determining whether or not the customer served by the store clerk has purchased a product based on the acquired information regarding the purchased product;
generating an analysis image in which a result of the determination is associated with the store clerk who has served the customer; and
displaying the generated analysis image on a display device.

4. The information output program according to claim 1, wherein
the processing of specifying includes processing of specifying the first area, the second area, and the first relationship by inputting the acquired video to a machine learning model, and
the machine learning model is a model for human object interaction detection (HOID) for which machine learning is executed to identify a first class that indicates the store clerk and first area information that indicates an area in which the store clerk appears, a second class that indicates the customer and second area information that indicates an area in which the customer appears, and an interaction between the first class and the second class.

5. The information output program according to claim 2, wherein
the processing of specifying includes processing of specifying the third area, the fourth area, and the second relationship by inputting the acquired video to a machine learning model, and
the machine learning model is a model for human object interaction detection (HOID) for which machine learning is executed to identify a first class that indicates an object that includes the product and first area information that indicates an area in which the object appears, a second class that indicates a person who purchases the product and second area information that indicates an area in which the person appears, and an interaction between the first class and the second class.

6. An information output method comprising:
acquiring a video of an inside of a store;
specifying, by analyzing the acquired video, a first area that includes a store clerk, a second area that includes an object customer who purchases a product, and a first relationship that identifies an interaction between the store clerk and the customer, from the video;
determining that the store clerk included in the first area has performed service behavior with respect to the customer included in the second area based on the specified first relationship; and
outputting a result of the determination to a display device.

7. An information processing device executing a processing of:
acquiring a video of an inside of a store;
specifying, by analyzing the acquired video, a first area that includes a store clerk, a second area that includes an object customer who purchases a product, and a first relationship that identifies an interaction between the store clerk and the customer, from the video;
determining that the store clerk included in the first area has performed service behavior with respect to the customer included in the second area based on the specified first relationship; and
outputting a result of the determination to a display device.
